# EUROPÄISCHE PATENTSCHRIFT

(11) **EP 1 351 070 B1**
(45) Veröffentlichungstag und Bekanntmachung des Hinweises auf die Patenterteilung: **14.01.2009**
(21) Anmeldenummer: 02405206.0
(22) Anmeldetag: 18.03.2002
(51) Int. Cl.: G01S 17/10, G01S 7/481, G01S 7/487, G01S 7/497

(54) **Elektrooptisches para-axiales Distanzmesssystem**
Electrooptical and axial parallel distance measuring system
Système de mesure électro-optique de distance à axe parallèle

(43) Veröffentlichungstag der Anmeldung: 08.10.2003
(73) Patentinhaber: HILTI Aktiengesellschaft, 9494 Schaan (LI); JENOPTIK Laser, Optik, Systeme GmbH, 07745 Jena (DE)
(72) Erfinder: Gogolla, Torsten, 9488 Schellenberg (LI); Winter, Andreas, 6800 Feldkirch (AT); Seifert, Helmut, 07616 Serba (DE); Penzold, Martin, 07745 Jena (DE); Schusser, Gero, 07616 Buergel (DE); Schmidt, Dieter, 07545 Gera (DE)

(56) Entgegenhaltungen:
- EP-A- 0 801 315
- EP-B- 0 701 702
- WO-A-93/20458
- DE-A- 19 513 823
- DE-A- 19 860 464
- DE-C- 19 855 296
- US-A- 4 403 857
- US-A- 4 876 446

## Beschreibung

Die Erfindung bezeichnet ein elektrooptisches Distanzmesssystem für grosse Messbereiche mit parallel beabstandeter Anordnung der optischen Sende- und Empfangsachse, nachfolgend para-axiale Anordnung, wie ein handhabbares Distanzmessgerät.

Ein derartiges elektrooptisches Distanzmesssystem bspw. nach der US4403857 weist im wesentlichen neben der Rechen- sowie Ein/Ausgabeeinheit, der Phasen- bzw. Laufzeitmessung und einer Referenzfotodiode insbesondere eine Strahlquelle mit zugeordneter Sendeoptik sowie einen beabstandeten Strahlempfänger mit zugeordneter Empfangsoptik auf, deren optische Achsen jeweils parallel zum Messlichtstrahl orientiert sind. Der von der Strahlquelle ausgehende Primärlichtstrahl wird nach der Kollimation einer Kollimatorlinse in einen Messlichtstrahl und einen Referenzlichtstrahl aufgespalten, welcher auf die Referenzfotodiode auftrifft. Üblicherweise ist die Strahlquelle mit zugeordneter Sendeoptik sowie der Strahlempfänger mit zugeordneter Empfangsoptik jeweils als konstruktive Einheit ausgebildet. Der vom Dynamikbereich und der effektiven Apertur des Strahlempfängers begrenzte Messbereich ist bei derartigen, prinzipiell einfach ausgeführten Distanzmesssystemen zu klein.

Nach der DE19513823 ist bei einem elektrooptischen koaxialen Distanzmesssystem sowohl die als Laserdiode ausgeführte Strahlquelle als auch der Strahlempfänger jeweils direkt an einer gemeinsamen in sich steifen Leiterträgerplatine mit weiteren elektronischen Bauelementen elektrisch leitend befestigt und senkrecht zueinander orientiert. Zudem erfolgt vor der Sendeoptik eine Referenzlichtstrahlauskopplung des Primärlichtstrahls zu einer Referenzfotodiode. Es besteht keine para-axiale Anordnung der optischen Sende- und Empfangsachse, wodurch zusätzliche Strahlumlenkmittel wie Umlenkspiegel notwendig sind.

Nach der DE19855296 wird als Strahlempfänger eine nicht justagebedürftige, grossflächige Fotodiode verwendet. Grossflächige Fotodioden ermöglichen im realen Einsatz durch Störeinflüsse wie Fremdlicht, Inhomogenitäten auf der aktiven Detektorfläche, Dunkelstom und Störreflexe aus dem Nahbereich sowie auf kleiner bspw. 500 MHz begrenzte Messfrequenzen nur einen kleinen Messbereich. Zudem weisen sie einen vergleichsweise grossen Messfehler auf und benötigen hohe Messzeiten.

Nach der DE19860464 weist ein handhabbares Laserdistanzmessgerät für im Baugewerbe übliche grosse Messbereiche von 0,30 m bis 30 m im Brennpunkt der Empfangsoptik eine kleinflächige Fotodiode zur Minimierung von Störeinflüssen sowie eine modifizierte Empfangsoptik mit einem zusätzlichen, winkelig versetzten Sekundärbrennpunkt für das durch die paraaxiale Anordnung versetzte Bild eines im Nahbereich liegenden Messobjektes auf. Wesentlich an dieser Lösung ist, dass die modifizierte Empfangsoptik genau zwei bildseitige Brennpunkte aufweist, die dadurch entstehen, dass die Empfangslinse aus einem primären Linsenbereich und einem sekundären Linsenbereich besteht, wobei der sekundäre Linsenbereich über den gesamten Durchmesser der Empfangslinse gestreckt in senkrechter Richtung zur Sendeachse verläuft und eine trapezförmige Form aufweist, die zur Sendeachse hin schmaler wird. Die beiden Linsenbereiche sind so dimensioniert, dass über den gesamten gewünschten Distanzbereich vom Strahlempfänger ein innerhalb seines Empfindlichkeitsbereiches liegendes Reflexsignal empfangen wird.

Das Ziel eines hoch empfindlichen Distanzmessgerätes ist die Minimierung von Messbereich begrenzenden Störeinflüssen, insbesondere von solchen, die durch detektiertes Fremdlicht hervorgerufen werden. Zur Reduzierung des Fremdlichteinfalls können entweder kleine Detektorflächen und / oder grosse Brennweiten der Empfangsoptik verwendet werden. Dabei spielt das Verhältnis Detektordurchmesser zu Brennweite die entscheidende Rolle. Je kleiner dieses Verhältnis ist, um so weniger störendes Fremdlicht wird detektiert. Bei nichtkreisflächigen aktiven Detektorflächen oder bei Anordnungen mit mehreren Detektorflächen wird im Folgenden ebenfalls von Durchmesser gesprochen, wobei dann ein zu einer kreisförmigen Fläche äquivalenter Detektordurchmesser gemeint ist. Ein kleines Verhältnis äquivalenter Detektordurchmesser zu Brennweite der Empfangsoptik macht die Anordnung und insbesondere die Fotodiode bezüglich der Empfangsoptik und des Messlichtstrahls justagebedürftig, was üblicherweise bspw. nach der EP701702 durch mechanisch einstellbare Strahljustageeinrichtungen im Messpfad wie eine Lichtleitfaser ermöglicht wird, welche insbesondere im rauhen Baugewerbe potentielle Fehlerquellen darstellen. Während des Justageverfahrens wird das mit üblichen optischen Justagehilfsmitteln kombinierte Laserdistanzmessgerät bei aktiviertem Messlichtstrahl auf einen optimalen Strahlengang justiert. Zwecks vereinfachter Beschreibung wird im Folgenden von kleinflächige Fotodiode gesprochen, womit jedoch das kleine Verhältnis äquivalenter Detektordurchmesser zu Brennweite der Empfangsoptik gemeint ist. Da Anordnungen mit einem kleinen Verhältnis Detektordurchmesser zu Brennweite zu einem starken lateralen Versatz des abgebildeten Leuchtflecks neigen, so dass bei kleinen Distanzen u.U. kein Licht die fotosensitive Fläche erreicht, sind Massnahmen zur Signalanhebung für den unteren Distanzmessbereich notwendig. Die Massnahmen sind entweder die Verwendung zusätzlicher Elemente im Empfängerstrahlengang, die wie bei DE19860464 einen zusätzlichen Sekundärbrennpunkt erzeugen oder Umlenkelemente wie bei EP701702, die Licht aus dem Nahbereich auf die aktive Detektorfläche führen. Ebenso lassen sich verschiebbare aktive Detektorflächen wie bei EP701702 einsetzen. Eine andere Massnahme ist der Einsatz mindestens einer zweiten aktiven Detektorfläche, die speziell Licht aus dem Nahbereich detektiert. Auch eine schlitzförmige aktive Detektorfläche ist möglich, wobei mit kleiner werdender Distanz Teile des abgebildeten Messlichtstrahls entlang des Schlitzes laufen. Alle beschriebenen Massnahmen werden im Folgenden mit Massnahmen zur Signalanhebung für den unteren Distanzmessbereich bezeichnet.

Die Aufgabe der Erfindung besteht in der Realisierung eines robust justierbaren, para-axialen Distanzmessgerätes für grosse Messbereiche. Als ein weiterer Aspekt soll die Justageprozedur einen möglichst geringen Zeitaufwand erfordern und einfach automatisierbar sein. Auf zusätzliche Strahlumlenkeinrichtungen oder Strahljustageeinrichtungen wie Umlenkspiegel und mechanische Vorrichtungen zur Verkippung und Verstellung soll verzichtet werden. Dies führt zu einer Kostenreduktion und aufgrund des geringeren Bauteilbedarfs zu einer erhöhten Zuverlässigkeit des Distanzmessgerätes.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein elektrooptisches Distanzmesssystem für grosse Messbereiche eine para-axiale Anordnung einer Strahlquelle mit einer zugeordneten Sendeoptik sowie einen, als zumindest eine kleinflächige Fotodiode ausgebildeten, Strahlempfänger mit einer zugeordneten Empfangsoptik auf, die Massnahmen zur Signalanhebung für den unteren Distanzmessbereich enthält. Die Strahlquelle, die Sendeoptik, die Empfangsoptik und der Strahlempfänger sind mit ihren optischen Achsen jeweils parallel zu dem Messlichtstrahl orientiert und der Messlichtstrahl gelangt direkt, d.h. ohne Strahlumlenkeinrichtungen oder Strahljustageeinrichtungen, möglicherweise jedoch durch ein Schutzfenster, von der Sendeoptik zum Messobjekt und weiter zur Empfangsoptik. Die Strahlquelle und die kleinflächige Fotodiode sind miteinander mechanisch starr über zumindest eine in sich steif verbundene Leiterträgerplatine verbunden, indem zumindest die kleinflächige Fotodiode elektrisch leitend sowie temporär in der Position justierbar über ihre elektrischen Kontakte und optional zusätzlich über ihr Gehäuse direkt an der justierten Position auf der Leiterträgerplatine fixiert ist.

Durch die über ihre elektrischen Kontakte und optional zusätzlich über ihr Gehäuse direkt an der justierten Position auf der Leiterträgerplatine fixierte kleinflächige Fotodiode ist ein robustes sowie temporär während des Justageverfahrens die Position der kleinflächigen Fotodiode bezüglich der Empfangsoptik justierbares, bspw. durch vergrösserte Justagespalte zwischen den Kontakten der Fotodiode und der Leiterträgerplatine und/oder vergrösserte Kontaktflächen auf der Leiterträgerplatine , para-axiales Distanzmesssystem für grosse Messbereiche realisiert.

Vorteilhaft ist die Strahlquelle elektrisch leitend sowie temporär in der Position justierbar über ihre elektrischen Kontakte und optional zusätzlich über ihr Gehäuse direkt an der justierten Position auf der Leiterträgerplatine fixiert, wodurch temporär während des Justageverfahrens die Position der Strahlquelle bezüglich der, weiter vorteilhaft als Kollimationsoptik ausgebildeten, Sendeoptik justierbar ist.

Vorteilhaft ist ein Strahlquellenmodul, welches die Strahlquelle direkt starr mit der Sendeoptik verbindet, mit den elektrischen Kontakten der Strahlquelle und optional zusätzlich über das Gehäuse der Strahlquelle auf einer mit der kleinflächigen Fotodiode gemeinsamen Leiterträgerplatine fixiert, wodurch das Strahlquellenmodul selbst vorjustierbar ist.

Vorteilhaft weist das Laserdistanzmessgerät einen in sich starren Optikträger auf, auf welchem sowohl die Sendeoptik bzw. das Strahlquellenmodul als auch die Empfangsoptik fixiert ist, wodurch technologisch einfach eine para-axiale Anordnung der Sendeoptik und der Empfangsoptik realisierbar ist.

Vorteilhaft ist die zumindest eine Leiterträgerplatine mit Befestigungsmitteln wie Schrauben, Nieten oder Kleber mechanisch starr mit dem Optikträger verbunden, wodurch eine robuste, mechanisch starre Zuordnung der Strahlquelle mit zugeordneter Sendeoptik und/oder des Strahlempfängers mit zugeordneter Empfangsoptik über den Optikträger und die Leiterträgerplatine vermittelt wird.

Vorteilhaft ist die Strahlquelle und die kleinflächige Fotodiode mit jeweils einer Leiterträgerplatine, welche jeweils mit dem in sich starren Optikträger verbunden sind, direkt über ihre jeweiligen elektrischen Kontakte und optional zusätzlich über ihre jeweiligen Gehäuse an jeweils einer justierten Position fixiert, wodurch das jeweils die weiteren benötigten elektronischen Bauteile aufweisende Sendemodul und das Empfängermodul separat auf getrennten Leiterträgerplatinen vorfertigbar ist.

Vorteilhaft ist die mit den elektrischen Kontakten und optional zusätzlich über das Gehäuse direkt an einer zumindest in Strahlrichtung justierten Position auf der Leiterträgerplatine fixierte Strahlquelle reibschlüssig in den in sich starren Optikträger eingepresst und auf der, mit der kleinflächigen Fotodiode gemeinsamen, Leiterträgerplatine fixiert, wodurch während des Justageverfahrens bei aktivierter Strahlquelle zusätzlich die Position der Strahlquelle in Richtung ihrer optischen Achse bezüglich der Sendeoptik temporär justierbar ist.

Vorteilhaft ist das Strahlquellenmodul starr mit dem in sich starren Optiktträger verbunden sowie über die elektrischen Kontakte der Strahlquelle auf der Leiterträgerplatine kontaktiert, wodurch ein in sich vorjustiertes Strahlquellenmodul verwendbar ist.

Vorteilhaft ist die Brennweite der Empfangsoptik kleiner 40 mm, weiter vorteilhaft kleiner 25 mm, wodurch vermittelt über die starke Brechkraft auch winkelversetzte Anteile des im Nahbereich reflektierten Messlichtstrahls die kleinflächige Fotodiode erreichen. Zudem kann die Empfangsoptik vorteilhaft mit einem Farbfilter entsprechend der Wellenlänge des Messlichtstrahls kombiniert sein.

Vorteilhaft ist das Verhältnis des äquivalenten Detektordurchmessers zu der Brennweite der Empfangsoptik kleiner als 0.005, vorzugsweise kleiner als 0.001, wodurch eine hohe Störsicherheit insbesondere hinsichtlich Fremdlicht und Störreflexe aus dem Nahbereich, erreicht wird.

Vorteilhaft weist die kleinflächigen Fotodiode eine aktive Fläche im Durchmesser kleiner 100 um, vorzugsweise kleiner 30 um auf, wodurch eine hohe Störsicherheit insbesondere hinsichtlich Fremdlicht, Störreflexe aus dem Nahbereich, Inhomogenitäten auf der fotosensitiven Fläche und Dunkelströme erreicht wird.

Vorteilhaft ist die kleinflächige Fotodiode als eine grossflächige Fotodiode mit einer zugeordneten, weiter vorteilhaft als lichtundurchlässige Beschichtung aufgebrachten, die aktive Fläche begrenzend abschattende, Maske mit zumindest einer Blendenöffnung ausgebildet, wodurch eine definierte Grösse und Lage der aktiven Fläche der kleinflächigen Fotodiode technologisch einfach einstellbar ist.

Vorteilhaft sind weitere aktive Flächen, weiter vorteilhaft durch weitere Blendenöffnungen der Maske oder weitere kleinflächige Fotodioden para-axial versetzt zu der ersten aktiven Fläche zugeordnet, wodurch winkelversetzte Anteile des im Nahbereich reflektierten Messlichtstrahls mit definierter Intensität zumindest eine aktive Fläche erreichen.

Vorteilhaft ist die kleinflächige Fotodiode oder die Blendenöffnung der Maske z.B. schlitzförmig in einer Dimension derartig begrenzt, dass mit kleiner werdender Distanz Teile des abgebildeten Messlichtstrahls entlang der länglichen aktiven Fläche laufen, wodurch winkelversetzte Anteile des im Nahbereich reflektierten Messlichtstrahls mit definierter Intensität die aktive Fläche erreichen.

Vorteilhaft ist die kleinflächige Fotodiode als SMD-Fotodiode ausgebildet, wodurch eine Miniaturisierung und Kostenreduktion begünstigt wird.

Vorteilhaft ist eine Referenzfotodiode vorhanden, auf welcher weiter vorteilhaft ein von einem Primärlichtstrahl abgezweigter Referenzlichtstrahl auftrifft, wodurch eine interne Kalibrierung der Distanzmessung möglich wird.

Vorteilhaft ist zur Referenzlichtstrahlauskopplung zwischen der Strahlquelle und der Sendeoptik ein Reflexionsmittel angeordnet, welches einen Teil des Primärstrahls als Referenzlichtstrahl zu der Fotodiode oder einer Referenzfotodiode reflektiert oder streut, wodurch lokale Inhomogenitäten im Referenzlichtstrahl vermieden werden, welche bedingt durch die Gesetze der Fourieroptik bei einer Referenzlichtstrahlauskopplung nach der Sendeoptik möglich sind.

Vorteilhaft ist das Reflexionsmittel als ein ausschliesslich in einem radialen Randbereich des von der Strahlquelle ausgehenden divergenten Primärstrahls angeordneter, diffus reflektierender Streukörper ausgebildet bspw. als eine in den divergenten Primärstrahl hineinragende Streukontur des Optiktträgers oder als Streufleck auf der bzw. Streufassung um die Sendeoptik, was technologisch einfach ist.

Im zugeordneten Justageverfahren wird bei dem mit üblichen optischen Justagehilfsmitteln, bspw. einer optisch im unendlichen angeordneten Kamera, kombinierten Distanzmesssystem bei aktiviertem Messlichtstrahl zumindest die kleinflächige Fotodiode, vorzugsweise durch einen in einer Feedback-Schleife automatisch auf einen Justagesollwert geregelten Manipulator, in einem ersten Schritt translatorisch relativ zur Leiterträgerplatine so verschoben, dass ein im Unendlichen reflektierter bzw. zurückgestreuter Messlichtstrahl auf einen vorbestimmten Bereich der kleinflächigen Fotodiode auftrifft und in einem zweiten Schritt die kleinflächige Fotodiode über ihre elektrischen Kontakte elektrisch leitend direkt, bspw. mit Weichlot oder Leitkleber, an einer justierten Position auf der Leiterträgerplatine fixiert. Dadurch ist das Distanzmesssystem als Ganzes automatisierbar justierbar.

Der Vorteil dieses Justageverfahrens ist, dass nur ein Bauelement justiert werden muss, wobei eine translatorische Justage ohne eine Verkippung hinreichend ist. Im Zusammenhang mit der Justage ist demnach nur eine stabile positionshaltige mechanische Verbindung erforderlich. Das Verfahren ist somit einfach automatisierbar. Die Justage der kleinflächigen Fotodiode kann sowohl manuell als auch automatisch über einen Manipulator mit einem Roboter und einer Bildverarbeitung vorgenommen werden.

Vorteilhaft wird im zugeordneten Justageverfahren bei aktiviertem Messlichtstrahl die Strahlquelle, vorzugsweise durch einen in einer Feedback-Schleife automatisch auf einen Justagesollwert geregelten Manipulator, in einem vorgelagerten ersten Kollimationsjustageschritt translatorisch relativ zur Leiterträgerplatine so verschoben, dass der Messlichtstrahl im Unendlichen fokussiert ist und in einem vorgelagerten zweiten Kollimationsjustageschritt die Strahlquelle über ihre elektrischen Kontakte elektrisch leitend direkt, bspw. mit Weichlot oder Leitkleber, an einer justierten Position auf der Leiterträgerplatine fixiert. Dadurch ist der Kollimator separat sowie automatisierbar justierbar.

Die Erfindung wird bezüglich eines vorteilhaften Ausführungsbeispiels näher erläutert mit:
Fig. 1 als Distanzmesssystem
Fig. 2 als Variante
Fig. 3 als Einzelheit
Fig. 4a, 4b als Befestigungsvarianten
Fig. 6 als Variante mit Referenzfotodiode

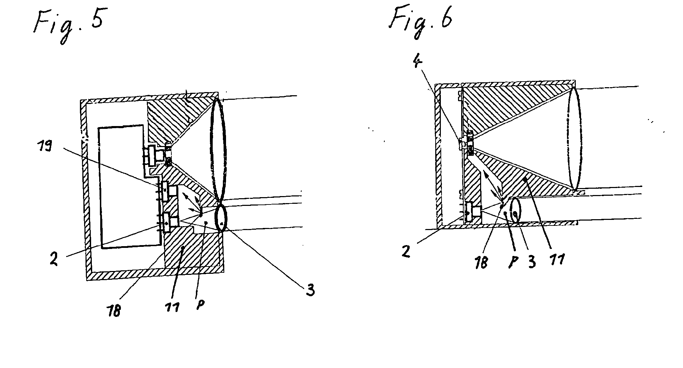

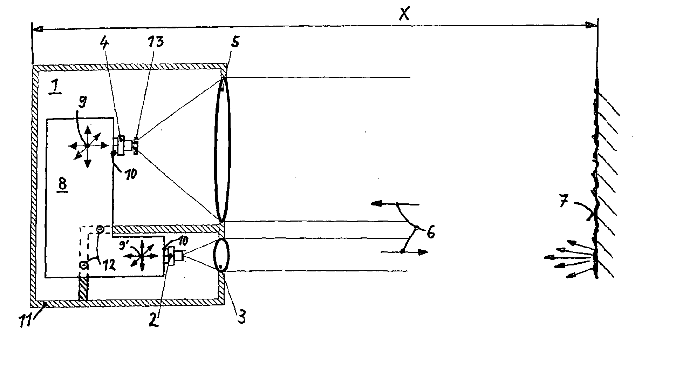

Fig. 5 als Variante ohne Referenzfotodiode

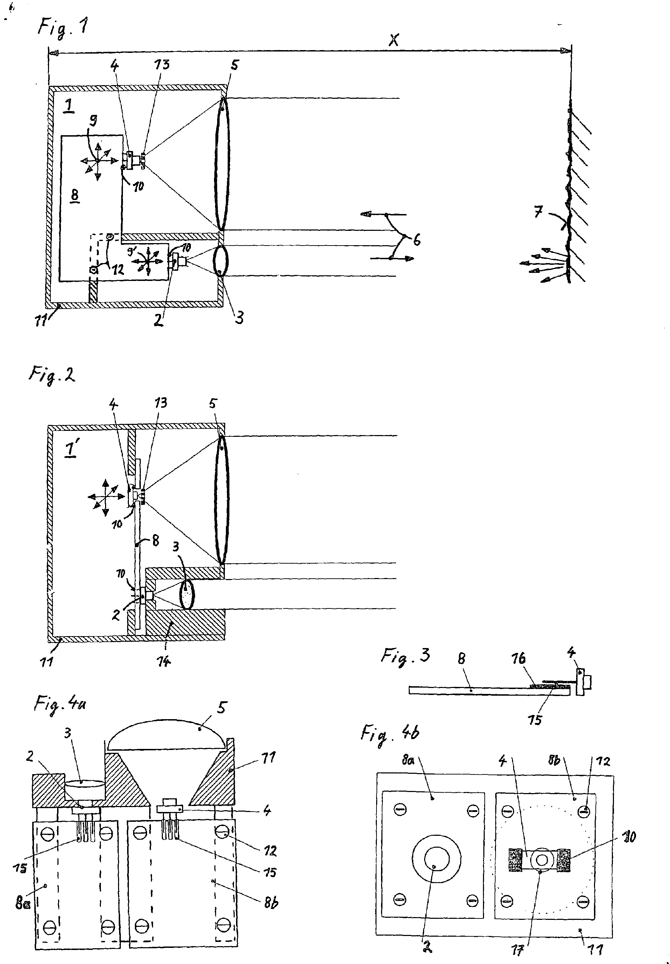

Nach Fig. 1 weist ein als Laserdistanzmessgerät ausgeführtes elektrooptisches Distanzmesssystem 1 eine para-axiale Anordnung einer Strahlquelle 2 mit einer zugeordneten Sendeoptik 3 sowie einen, als zumindest eine kleinflächige Fotodiode 4 ausgebildeten, Strahlempfänger mit einer zugeordneten Empfangsoptik 5 kleiner Brennweite auf, die Massnahmen zur Signalanhebung für den unteren Distanzmessbereich der Distanzen X enthält. Ein Messlichtstrahl 6 gelangt direkt von der Sendeoptik 3 zu einem Messobjekt 7 und weiter zur Empfangsoptik 5. Die Strahlquelle 2, die Sendeoptik 3, die kleinflächige Fotodiode 4 und die Empfangsoptik 5 sind mit ihren optischen Achsen jeweils parallel zu dem Messlichtstrahl 6 orientiert, welcher direkt von der Sendeoptik 3 zum Messobjekt 7 und weiter zur Empfangsoptik 5 gelangt. Die Strahlquelle 2 und die kleinflächige Fotodiode 4 sind miteinander mechanisch starr über eine gemeinsame, in sich steif verbundene Leiterträgerplatine 8 verbunden, wobei die kleinflächige Fotodiode 4 und die Strahlquelle 2 elektrisch leitend sowie temporär in den Positionen 9, 9' justierbar über ihre elektrischen Kontakte 10 direkt an der justierten Position 9, 9' auf der Leiterträgerplatine 8 fixiert ist. Das Distanzmesssystem 1 weist einen in sich starren Optikträger 11 auf, auf welchem sowohl die Sendeoptik 3 als auch die Empfangsoptik 5 fixiert ist. Die Leiterträgerplatine 8 ist mit als Schrauben ausgebildeten lösbaren Befestigungsmitteln 12 mechanisch starr mit dem Optikträger 11 verbunden. Durch eine Maske 13 der kleinflächigen Fotodiode 4 mit zwei para-axial versetzten Blendenöffnungen für eine erste aktive Fläche und eine zweite aktive Fläche, welche für unterschiedliche Distanzen X ausgelegt sind, sind unterschiedlichen Distanzen X jeweils unterschiedliche Blendenöffnungen zugeordnet.

Nach Fig. 2 ist bei einer Variante des Distanzmesssystems 1' ein Strahlquellenmodul 14, welches die Strahlquelle 2 direkt starr mit der Sendeoptik 3 verbindet, über die elektrischen Kontakte 10 der Strahlquelle 2 und zusätzlich über das Gehäuse der Strahlquelle 2 auf der mit Befestigungsmitteln 12 starr am Objektträger 11 befestigten Leiterträgerplatine 8 fixiert, an welcher zudem die, von der Maske 13 abgeschattete und als SMD-Fotodiode ausgebildete, kleinflächige Fotodiode 4 elektrisch leitend sowie temporär in der Position 9 justierbar über ihre elektrischen Kontakte 10 und zusätzlich über ihr Gehäuse direkt an der justierten Position 9 fixiert ist. Bei einer weiteren Variante des Distanzmesssystems 1' ist, anhand von Fig. 2 mit geringfügigen Modifikationen erläutert, ein Strahlquellenmodul 14, welches die Strahlquelle 2 direkt mit der Sendeoptik 3 verbindet, mit Befestigungsmitteln 12 am Optikträger 11 fixiert und über die elektrischen Kontakte 10 der Strahlquelle 2 und zusätzlich über das Gehäuse der Strahlquelle 2 an der mit Befestigungsmitteln 12 starr am Optikträger 11 befestigten Leiterträgerplatine 8 fixiert, an welcher zudem die, von der Maske 13 abgeschattete und als SMD-Fotodiode ausgebildete kleinflächige Fotodiode 4 elektrisch leitend sowie temporär in der Position 9 justierbar über ihre elektrischen Kontakte 10 und zusätzlich über ihr Gehäuse direkt an der justierten Position 9 fixiert ist. Bei einer weiteren Variante des Distanzmesssystems 1' ist, ebenfalls anhand von Fig. 2 mit geringfügigen Modifikationen erläutert, das Strahlquellenmodul 14 in den Optikträger 11 eingearbeitet (also Bestandteil des Optikträgers 11), welcher die Strahlquelle 2 direkt starr mit der Sendeoptik 3 verbindet. Die Strahlquelle 2 ist reibschlüssig in den Optikträger 11 eingeführt und über die elektrischen Kontakte 10 der Strahlquelle 2 und zusätzlich über das Gehäuse der Strahlquelle 2 an der mit Befestigungsmitteln 12 starr am Optikträger 11 befestigten Leiterträgerplatine 8 fixiert, an welcher zudem die, von der Maske 13 abgeschattete und als SMD-Fotodiode ausgebildete kleinflächige Fotodiode 4 elektrisch leitend sowie temporär in der Position 9 justierbar über ihre elektrischen Kontakte 10 und zusätzlich über ihr Gehäuse direkt an der justierten Position 9 fixiert ist.

Nach Fig. 3 sind die Kontakte 10 der kleinflächigen Fotodiode 4 über einen mit Weichlot oder Leitkleber überbrückbaren Justagespalt 15 längs der vergrösserten Kontaktflächen 16 der Leiterträgerplatine 8 angeordnet.

Nach den Fig. 4a, 4b sind verschiedene Befestigungsvarianten der Leiterträgerplatine 8 zum Optikträger 11 dargestellt. Nach Fig. 4a sind zwei einzelne, zur jeweils bezüglich der optischen Achsen parallelen Orientierung der Strahlquelle 2, der Sendeoptik 3, der kleinflächigen Fotodiode 4 und der Empfangsoptik 5 mit ihren Flächennormalen senkrecht angeordnete, Leiterträgerplatinen 8a, 8b, welche dem Sendemodul und dem Empfangsmodul zugeordnet sind, über Befestigungsmittel 12 mechanisch starr mit dem Optikträger 11 und somit auch gegenseitig verbunden. Nach Fig. 4b sind zwei einzelne, zur jeweils bezüglich der optischen Achsen parallelen Orientierung der Strahlquelle 2 und der kleinflächigen Fotodiode 4 mit ihren Flächennormalen parallel angeordnete Leiterträgerplatinen 8a, 8b, welche dem Sendemodul und dem Empfangsmodul zugeordnet sind, über Befestigungsmittel 12 mechanisch starr mit dem Optikträger 11 und somit auch gegenseitig verbunden. Die als SMD-Fotodiode ausgebildete, kleinflächige Fotodiode 4 ist hinter einer Bohrung 17 durch die Leiterträgerplatine 8b angeordnet und mit dieser über ihre Kontakte 10 elektrisch leitend sowie temporär justierbar verbunden.

Nach Fig. 5 ist zur Referenzlichtstrahlauskopplung zwischen der Strahlquelle 2 und der Sendeoptik 3 ein Reflexionsmittel 18 angeordnet, welches ausschliesslich in einen radialen Randbereich des von der Strahlquelle 2 ausgehenden, stark divergenten Primärstrahls P einkragt und einen Teil des Primärstrahls P als Referenzlichtstrahl direkt durch einen transparenten Freiraum im Optikträger 11 zu einer Referenzfotodiode 19 reflektiert.

Nach Fig. 6 ist zur Referenzlichtstrahlauskopplung das Reflexionsmittel 18 als ausschliesslich in einem radialen Randbereich in den stark divergenten Primärstrahl P hineinragende Streukontur des Optiktträgers 11 ausgebildet, welche einen Teil des Primärstrahls P als Referenzlichtstrahl direkt durch einen transparenten Freiraum im Optikträger 11 zu der kleinflächigen Fotodiode 4 streut.

Bei einer bevorzugten Ausführungsvariante der Justage wird vorbereitend die Strahlquelle 2 reibschlüssig in den Optikträger 11 auf Anschlag eingepresst, die Leiterträgerplatine 8 mit Befestigungselementen 12 an den Optikträger fixiert und die Strahlquelle 2 mit ihren elektrischen Kontakten und optional mit ihrem Gehäuse an der Leiterträgerplatine 8 kontaktiert und fixiert. Zur Strahlkollimierung wird die Sendeoptik 3 bei aktivierter Strahlquelle 2 in Richtung ihrer optischen Achse justiert und anschliessend verklebt, so dass ein kollimierter Messlaserstrahl resultiert, und die Empfangsoptik 5 wird auf Anschlag mit dem Optikträger 11 verklebt. Danach wird bei aktiviertem Messlichtstrahl mit einem Manipulator die von hinten mit einem Greifer erfasste kleinflächigen Fotodiode 4 so translatorisch verschoben, dass sich der Fokus des aus dem Unendlichen kommenden Streulichtes des Laserleuchtflecks, der vom als Laserstrahl ausgebildeten Messlichtstrahl 6 auf einer weit entfernten Fläche gebildet wird, auf einer dem Fernbereich zugeordneten bestimmten Position der aktiven Fläche der kleinflächigen Fotodiode 4 auftrifft. Nach der Justierung wird die kleinflächige Fotodiode 4 direkt über ihre elektrischen Kontakte 10 an der justierten Position 9, 9' auf der Leiterträgerplatine 8 mit einer Lötverbindung fixiert. Justagetoleranzen werden dabei durch Justagespalte 16 mit Lötbrücken und vergrösserten Kontaktflächen 16 ausgeglichen. Die direkte Fixierung der kleinflächigen Fotodiode 4 auf der Leiterträgerplatine 8 dient als stabile mechanische Halterung sowie als elektrische Kontaktierung, wobei sich keine weiteren Halteelemente für die kleinflächige Fotodiode 4 im Optikträger 11 befinden.

## Patentansprüche

1. Elektrooptisches Distanzmesssystem für grosse Messbereiche mit einer para-axialen Anordnung einer Strahlquelle (2) mit einer zugeordneten Sendeoptik (3) sowie eines, als zumindest einer justagebedürflige kleinflächige Fotodiode (4) ausgebildeten, Strahlempfängers mit einer zugeordneten Empfangsoptik (5), die Maßnahmen zur Signalanhebung für den unteren Distanzmessbereich für Distanzen (X) enthält, wobei die Strahlquelle (2), die Sendeoptik (3), die kleinflächige Fotodiode (4) und die Empfangsoptik (5) mit ihren optischen Achsen jeweils parallel zu dem Messlichtstrahl (6) orientiert sind und der Messlichtstrahl (6) direkt von, der Sendeoptik (2) zum Messobjekt und weiter zur Empfangsoptik gelangt, **darduch gekennzeichnet**, **das** die Strahlquelle (2) und die kleinflächige Fotodiode (4) miteinander mechanisch starr über zumindest eine in sich steif verbundene Leiterträgerplatine (8, 8a, 8b) verbunden sind, indem die kleinflächige Fotodiode (4) elektrisch leitend sowie temporär während eines justageverfahrens in der Position (9, 9') justierbar zumindest über ihre elektrischen Kontakte (10) direkt an der justierten Position (9, 9') auf der Leiterträgerplatine (8, 8a, 8b) fixiert ist.

2. Elektrooptisches Distanzmesssystem nach Anspruch 1, **dadurch gekennzeichnet, dass** die Strahlquelle (2) elektrisch leitend sowie temporär in der Position (9, 9') justierbar zumindest über ihre elektrischen Kontakte (10) direkt an der justierten Position (9, 9') auf der Leiterträgerplatine (8, 8a, 8b) fixiert ist.

3. Elektrooptisches Distanzmesssystem nach Anspruch 1 oder 2, **dadurch gekennzeichnet, dass** ein Strahlquellenmodul (14), welches die Strahlquelle (2) direkt starr mit der Sendeoptik (3) verbindet, zumindest mit den elektrischen Kontakten (10) der Strahlquelle (2) entweder auf einer mit der kleinflächigen Fotodiode (4) gemeinsamen Leiterträgerplatine (8) oder auf einer mit der Leiterträgerplatine (8b) der kleinflächigen Fotodiode (4) starr verbundenen separaten Leiterträgerplatine (8a) fixiert ist.

4. Elektrooptisches Distanzmesssystem nach Anspruch 3 **dadurch gekennzeichnet, dass** ein in sich starrer Optikträger (11) vorhanden ist, auf welchem sowohl die Sendeoptik (3) und/oder das Strahlquellenmodul (14) als auch die Empfangsoptik (5) fixiert ist.

5. Elektrooptisches Distanzmesssystem nach Anspruch 4, **dadurch gekennzeichnet, dass** die zumindest eine Leiterträgerplatine (8, 8a, 8b) mit Befestigungsmitteln (12) mechanisch starr mit dem Optikträger (11) verbunden ist.

6. Elektrooptisches Distanzmesssystem nach Anspruch 4 oder 5, **dadurch gekennzeichnet, dass** die Strahlquelle (2) und die kleinflächige Fotodiode (4) mit jeweils einer Leiterträgerplatine (8a, 8b) zumindest über ihre elektrischen Kontakte (10) direkt an einer justierten Position (9, 9') verbunden sind, welche jeweils mit dem in sich starren Optikträger (11) verbunden sind.

7. Elektrooptisches Distanzmesssystem nach einem der Ansprüche 4 bis 6, **dadurch gekennzeichnet, dass** die zumindest mit den elektrischen Kontakten (10) direkt an einer justierten Position (9, 9') auf der, mit der kleinflächigen Fotodiode (4) gemeinsamen, Leiterträgerplatine (8) fixierte Strahlquelle (2) am in sich starren Optikträger (11) fixiert und optional reibschlüssig eingepresst ist.

8. Elektrooptisches Distanzmesssystem nach einem der Ansprüche 4 bis 6, **dadurch gekennzeichnet, dass** ein Strahlquellenmodul (14) starr mit dem in sich starren Optiktträger (11) verbunden sowie über die elektrischen Kontakte (10) der Strahlquelle (2) auf der Leiterträgerplatine (8, 8a, 8b) kontaktiert ist.

9. Elektrooptisches Distanzmesssystem nach einem der vorherigen Ansprüche, **dadurch gekennzeichnet, dass** die Brennweite der Empfangsoptik (5) kleiner 40 mm, optional kleiner 25 mm ist.

10. Elektrooptisches Distanzmesssystem nach einem der vorherigen Ansprüche, **dadurch gekennzeichnet, dass** das Verhältnis des äquivalenten Detektordurchmessers einer aktiven Fläche der kleinflächigen Fotodiode (4) zu der Brennweite der Empfangsoptik (3) kleiner als 0.005, optional kleiner als 0.001 ist.

11. Elektrooptisches Distanzmesssystem nach einem der vorherigen Ansprüche, **dadurch gekennzeichnet, dass** die kleinflächige Fotodiode (4) eine aktive Fläche im äquivalenten Durchmesser kleiner 100 um, optional kleiner 30 um aufweist.

12. Elektrooptisches Distanzmesssystem nach einem der vorherigen Ansprüche, **dadurch gekennzeichnet, dass** die kleinflächige Fotodiode (4) als eine grossflächige Fotodiode mit einer zugeordneten, optional als lichtundurchlässige Beschichtung aufgebrachten, die aktive Fläche begrenzend abschattende, Maske (13) mit zumindest einer Blendenöffnung ausgebildet ist.

13. Elektrooptisches Distanzmesssystem nach einem der vorherigen Ansprüche, **dadurch gekennzeichnet, dass** einer ersten aktiven Fläche der kleinflächigen Fotodiode (4) eine zweite aktive Fläche, optional durch weitere Blendenöffnungen der Maske (13) oder weitere kleinflächige Fotodioden (4), para-axial versetzt zugeordnet ist.

14. Elektrooptisches Distanzmesssystem nach einem der vorherigen Ansprüche, **dadurch gekennzeichnet, dass** die kleinflächige Fotodiode (4) oder die Blendenöffnung der Maske (13) in einer Dimension derartig begrenzt ist, dass mit kleiner werdender Distanz (X) zumindest Teile der abgebildeten Messlichtstrahls (6) entlang einer länglichen aktiven Fläche laufen.

15. Elektrooptisches Distanzmesssystem nach einem der vorherigen Ansprüche, **dadurch gekennzeichnet, dass** die kleinflächige Fotodiode (4) als SMD-Fotodiode ausgebildet ist.

16. Elektrooptisches Distanzmesssystem nach einem der vorherigen Ansprüche, **dadurch gekennzeichnet, dass** eine Referenzfotodiode (19) vorhanden ist, auf welcher optional ein von einem Primärlichtstrahl abgezweigter Referenzlichtstrahl auftrifft.

17. Elektrooptisches Distanzmesssystem nach einem der vorherigen Ansprüche, **dadurch gekennzeichnet, dass** zwischen der Strahlquelle (2) und der Sendeoptik (3) ein Reflexionsmittel (18) angeordnet ist, welches einen Teil des divergenten Primärstrahls (P) als Referenzlichtstrahl zu der kleinflächigen Fotodiode (4) oder der Referenzfotodiode (19) reflektiert oder streut und dass optional das Reflexionsmittel (18) als diffus reflektierender Streukörper ausgebildet ist.

18. Justageverfahren für ein mit üblichen optischen Justagehilfsmitteln kombiniertes elektrooptisches Distanzmesssystem (1, 1') nach einem der vorherigen Ansprüche, **dadurch gekennzeichnet, dass** in einem ersten Schritt bei aktiviertem Messlichtstrahl zumindest die kleinflächige Fotodiode (4) relativ zur Leiterträgerplatine (8, 8a, 8b) translatorisch so verschoben wird, dass ein im Unendlichen reflektierter bzw. zurückgestreuter Messlichtstrahl (6) auf einen vorbestimmten Bereich der kleinflächigen Fotodiode (4) auftrifft und dass in einem zweiten Schritt die kleinflächige Fotodiode (4) zumindest über ihre elektrischen Kontakte (10) elektrisch leitend und direkt an einer justierten Position (9, 9') auf der Leiterträgerplatine (8, 8a, 8b) fixiert wird.

19. Justageverfahren nach Anspruch 18, **dadurch gekennzeichnet, dass** bei aktiviertem Messlichtstrahl (6) die Strahlquelle (2) in einem vorgelagerten ersten Kollimationsjustageschritt translatorisch relativ zur Leiterträgerplatine (8, 8a, 8b) so verschoben wird, dass der Messlichtstrahl (6) im Unendlichen fokussiert ist und dass in einem vorgelagerten zweiten Kollimationsjustageschritt die Strahlquelle (2) zumindest über ihre elektrischen Kontakte (10) elektrisch leitend direkt an der justierten Position (9, 9') auf der Leiterträgerplatine (8, 8a, 8b) fixiert wird.

20. Justageverfahren nach Anspruch 18 oder 19, **dadurch gekennzeichnet, dass** der erste Schritt und/oder der vorbereitende erste Kollimationsjustageschritt durch einen in einer Feedback-Schleife automatisch auf einen Justagesollwert geregelten Manipulator erfolgt.

## Claims

1. Electro-optical distance measuring system for large measurement ranges with a parallel axial arrangement of a beam source (2), with associated transmitting optics (3), and a beam receiver in the form of at least one adjusted, small-surface photodiode (4), the said beam receiver being associated with receiving optics (5) that contain means of producing a signal for the measurement of the lower range of distances (X), whereby the beam source (2), the transmitting optics (3), the small-surface photodiode (4) and the receiving optics (5) are in each case orientated, with their optical axes, parallel to the measuring light beam (6) and the measuring light beam (6) goes directly from the transmitting optics (2) to the object being measured and onto the receiving optics, **characterized in that** the beam source (2) and the small-surface photodiode (4) are firmly, mechanically connected to each other by means of at least one conductor-bearing plate (8, 8a, 8b), **in that** the small-surface photodiode (4) is electrically conductive and is temporarily fixed such that, during an adjustment process, it can, at least by means of its electrical contacts (10), temporarily be adjusted in position (9, 9') directly to the adjusted position (9, 9') on the conductor-bearing plate (8, 8a, 8b).

2. Electro-optical distance measuring system in accordance with claim 1, **characterized in that** the beam source (2) is electrically conductive and is temporarily fixed such that, during an adjustment process, it can, at least by means of its electrical contacts (10), temporarily be adjusted in position (9, 9') directly to the adjusted position (9, 9') on the conductor-bearing plate (8, 8a, 8b).

3. Electro-optical distance measuring system in accordance with claims 1 or 2, **characterized in that** a beam source module (14), which connects the beam source (2) directly and rigidly to the transmitting optics (3), is fixed with at least the electrical contacts (10) of the beam source (2), either to a conductor-bearing plate (8) that is common with the small-surface photodiode (4) or to a separate conductor-bearing plate (8a) that is rigidly connected to the conductor-bearing plate (8b) of the small-surface photodiode (4).

4. Electro-optical distance measuring system in accordance with claim 3, **characterized in that** there is a rigid optics base (11) on which both the transmitting optics (3) and/or the beam source module (14) and the receiving optics (5) are fixed.

5. Electro-optical distance measuring system in accordance with claim 4, **characterized in that** the at least one conductor-bearing plate (8, 8a, 8b) is rigidly, mechanically connected, by attachment means (12), to the optics base (11).

6. Electro-optical distance measuring system in accordance with claims 4 or 5, **characterized in that** the beam source (2) and the small-surface photodiode (4) are in each case directly connected, through a conductor-bearing plate (8a, 8b), by means of at least their electrical contacts (10), to an adjusted position (9, 9'), the electrical contacts (10) being rigidly connected to the rigid optics base (11).

7. Electro-optical distance measuring system in accordance with claims 4 to 6, **characterized in that** the beam source (2), which is at least fixed, with the electrical contacts (10), directly to an adjusted position (9, 9') on the conductor-bearing plate (8) that is common with the small-surface photodiode (4), is fixed on the rigid optics base (11) and is optionally pressed in and frictionally flush with the surface.

8. Electro-optical distance measuring system in accordance with claims 4 to 6, **characterized in that** a beam source module (14) is rigidly connected to the rigid optics base (11) and is connected to the conductor-bearing plate (8, 8a, 8b) by means of the electrical contacts (10) of the beam source (2).

9. Electro-optical distance measuring system in accordance with one of the preceding claims, **characterized in that** the focal length of the receiving optics (5) is less than 40 mm and, optionally less than 25 mm.

10. Electro-optical distance measuring system in accordance with one of the preceding claims, **characterized in that** the ratio between the detection diameter of an active surface of the small-surface photodiode (4) to the focal length of the receiving optics (3) is less than 0.005, and optionally less than 0.001.

11. Electro-optical distance measuring system in accordance with one of the preceding claims, **characterized in that** the small-surface photodiode (4) has an active surface in the equivalent diameter of less than 100 µm, optionally less than 30 µm.

12. Electro-optical distance measuring system in accordance with one of the preceding claims, **characterized in that** the small-surface photodiode (4) is in the form of a large-surface photodiode with an associated mask (13), with at least one aperture, that to a limited extent masks the active surface and that is optionally applied as a coating that is impermeable to light.

13. Electro-optical distance measuring system in accordance with one of the preceding claims, **characterized in that** a first active surface of the small-surface photodiode (4) has, associated with it, a second active surface that is para-axially displaced, optionally implemented by means of further apertures of the mask (13) or further small-surface photodiodes (4).

14. Electro-optical distance measuring system in accordance with one of the preceding claims, **characterized in that** the small-surface photodiode (4) or the aperture of the mask (13) is limited in one dimension such that, with declining distance (X), at least parts of the measuring light beam (6) that is developed run along an elongated, active surface.

15. Electro-optical distance measuring system in accordance with one of the preceding claims, **characterized in that** the small-surface photodiode (4) is in the form of an SMD photodiode.

16. Electro-optical distance measuring system in accordance with one of the preceding claims, **characterized in that** there is a reference photodiode (19) which is struck by a reference light beam which branches off from a main light beam.

17. Electro-optical distance measuring system in accordance with one of the preceding claims, **characterized in that** a reflector (18), which reflects or scatters a part of the diverging main beam (P), as a reference light beam, to the small-surface photodiode (4) or the reference photodiode (19), is disposed between the beam source (2) and the transmitting optics (3), and **in that** the reflector (18) is optionally in the form of a diffusely reflective, scattering body.

18. Adjustment process for an electro-optical distance measuring system (1, 1') combined with normal optical adjustment means in accordance with one of the preceding claims, **characterized in that**, in a first stage, with an activated measuring light beam, at least the small-surface photodiode (4) is shifted relative to the conductor-bearing plate (8, 8a, 8b) such that a measuring light beam (6) that is continuously reflected or dispersed back strikes the small-surface photodiode (4) in a set area, and **in that**, in a second stage, the small-surface photodiode (4), at least by means of its contacts, is electrically conductive and is fixed directly to an adjusted position (9, 9') on the conductor-bearing plate (8, 8a, 8b).

19. Adjustment process in accordance with claim 18, **characterized in that**, with the measuring light beam (6) activated, the beam source (2) is, in an upstream collimation adjustment stage, shifted relative to the conductor-bearing plate (8, 8a, 8b) such that the measuring light beam (6) is focussed on infinity and that, in an upstream, second collimation adjustment stage, the beam source (2) is fixed, at least by means of its electrical contacts (10), conductively connected directly to the adjusted position (9, 9') on the conductor-bearing plate (8, 8a, 8b).

20. Adjustment process in accordance with claim 18 or 19, **characterized in that** the first stage and/or the preparatory first collimation adjustment stage occurs by means of a manipulator that is automatically adjusted, in a feedback loop, to a required value.

## Revendications

1. Système électro-optique de mesure de distance pour grandes gammes de mesure, comprenant un agencement para-axial d'une source de rayonnement (2) à optique d'émission (3) associée et d'un récepteur de rayonnement conformé au moins en photodiode de petite surface (4) nécessitant un réglage, laquelle est pourvue d'une optique de réception (5) associée et contient des mesures d'augmentation de signal pour la gamme inférieure de mesure de distance pour des distances (X), la source de rayonnement (2), l'optique d'émission (3), la photodiode de petite surface (4) et l'optique de réception (5) étant orientées, par leurs axes optiques respectifs, parallèlement au faisceau lumineux de mesure (6) et le faisceau lumineux de mesure (6), et le faisceau lumineux de mesure (6) passant directement de l'optique d'émission (2) à l'objet mesuré et ensuite à l'optique de réception, **caractérisé en ce que** la source de rayonnement (2) et la photodiode de petite surface (4) sont reliées l'une à l'autre de manière mécaniquement rigide par l'intermédiaire d'au moins une carte de circuit imprimé (8, 8a, 8b) reliée rigidement en soi, la photodiode de petite surface (4) étant fixée de manière électroconductrice ainsi que temporairement, pendant une procédure de réglage, de manière réglable dans la position (9, 9') au moins par l'intermédiaire de ses contacts électriques (10), directement à la position réglée (9, 9') sur la carte de circuit imprimé (8, 8a, 8b).

2. Système électro-optique de mesure de distance selon la revendication 1, **caractérisé en ce que** la source de rayonnement (2) est fixée de manière électroconductrice ainsi que temporairement de manière réglable dans la position (9, 9'), au moins par l'intermédiaire de ses contacts électriques (10), directement à la position réglée (9, 9') sur la carte de circuit imprimé (8, 8a, 8b).

3. Système électro-optique de mesure de distance selon la revendication 1 ou 2, **caractérisé en ce qu'**un module de source de rayonnement (14), lequel relie directement la source de rayonnement (2) à l'optique d'émission (3) de manière rigide, est fixé au moins par les contacts électriques (10) de la source de rayonnement (2) soit sur une carte de circuit imprimé (8) commune à la photodiode de petite surface (4), soit sur une carte de circuit imprimé séparée (8a) reliée rigidement à la carte de circuit imprimé (8b) de la photodiode de petite surface (4).

4. Système électro-optique de mesure de distance selon la revendication 3, **caractérisé en ce qu'**il est prévu un support d'optiques (11) rigide en soi sur lequel sont fixés aussi bien l'optique d'émission (3) et/ou le module de source de rayonnement (14) que l'optique de réception (5).

5. Système électro-optique de mesure de distance selon la revendication 4, **caractérisé en ce** ladite au moins une carte de circuit imprimé (8, 8a, 8b) est reliée au support d'optiques (11) de manière mécaniquement rigide par des moyens de fixation (12).

6. Système électro-optique de mesure de distance selon la revendication 4 ou 5, **caractérisé en ce que** la source de rayonnement (2) et la photodiode de petite surface (4) sont respectivement reliées à une carte de circuit imprimé (8a, 8b) au moins par l'intermédiaire de leurs contacts électriques (10) directement à une position réglée (9, 9'), lesquelles cartes de circuit imprimé (8a, 8b) sont chacune reliées au support d'optiques (11) rigide en soi.

7. Système électro-optique de mesure de distance selon l'une des revendications 4 à 6, **caractérisé en ce que** la source de rayonnement (2) fixée au moins par les contacts électriques (10) directement à une position réglée (9, 9') sur la carte de circuit imprimé (8) commune à la photodiode de petite surface (4) est fixée au support d'optiques (11) rigide en soi et optionnellement enfoncée en formant une liaison par friction.

8. Système électro-optique de mesure de distance selon l'une des revendications 4 à 6, **caractérisé en ce qu'**un module de source de rayonnement (14) est relié rigidement au support d'optiques (11) rigide en soi et contacté par l'intermédiaire des contacts électriques (10) de la source de rayonnement (2) disposée sur la carte de circuit imprimé (8, 8a, 8b).

9. Système électro-optique de mesure de distance selon l'une des revendications précédentes, **caractérisé en ce que** la distance focale de l'optique de réception (5) est inférieure à 40 mm, optionnellement inférieure à 25 mm.

10. Système électro-optique de mesure de distance selon l'une des revendications précédentes, **caractérisé en ce que** le rapport du diamètre équivalent de détection d'une surface active de la photodiode de petite surface (4) à la distance focale de l'optique de réception (3) est inférieur à 0,005, optionnellement inférieur à 0,001.

11. Système électro-optique de mesure de distance selon l'une des revendications précédentes, **caractérisé en ce que** la photodiode de petite surface (4) présente une surface active d'un diamètre équivalent inférieur à 100 um, optionnellement inférieur à 30 um.

12. Système électro-optique de mesure de distance selon l'une des revendications précédentes, **caractérisé en ce que** la photodiode de petite surface (4) est réalisée sous la forme d'une photodiode de grande surface munie d'un masque (13) associé, lequel est pourvu d'au moins une ouverture de diaphragme, est optionnellement appliqué sous forme de revêtement opaque et limite la surface active.

13. Système électro-optique de mesure de distance selon l'une des revendications précédentes, **caractérisé en ce qu'**à une première surface active de la photodiode de petite surface (4) est associée en décalage para-axial une deuxième surface active, optionnellement par d'autres ouvertures de diaphragme du masque (13) ou d'autres photodiodes de petite surface (4).

14. Système électro-optique de mesure de distance selon l'une des revendications précédentes, **caractérisé en ce que** la photodiode de petite surface (4) ou l'ouverture de diaphragme du masque (13) est limitée dans une dimension, de manière que, lorsque la distance (X) diminue, au moins des parties du faisceau lumineux de mesure (6) reproduit se propagent le long d'une surface active allongée.

15. Système électro-optique de mesure de distance selon l'une des revendications précédentes, **caractérisé en ce que** la photodiode de petite surface (4) est réalisée sous forme de photodiode SMD.

16. Système électro-optique de mesure de distance selon l'une des revendications précédentes, **caractérisé en ce qu'**il est prévu une photodiode de référence (19) sur laquelle arrive, optionnellement, un faisceau lumineux de référence dérivé d'un faisceau lumineux primaire.

17. Système électro-optique de mesure de distance selon l'une des revendications précédentes, **caractérisé en ce qu'**entre la source de rayonnement (2) et l'optique d'émission (3) est disposé un moyen de réflexion (18) qui réfléchit ou diffuse une partie du faisceau primaire divergent (P) en tant que faisceau lumineux de référence vers la photodiode de petite surface (4) ou vers la photodiode de référence (19), et **en ce que**, optionnellement, le moyen de réflexion (18) est conformé en corps dispersif à réflexion diffuse.

18. Procédé de réglage pour un système électro-optique de mesure de distance (1, 1') selon l'une des revendications précédentes, combiné à des moyens de réglage optique courants, **caractérisé en ce que**, dans une première étape, le faisceau lumineux de mesure étant activé, au moins la photodiode de petite surface (4) est déplacée par translation par rapport à la carte de circuit imprimé (8, 8a, 8b) de manière qu'un faisceau lumineux de mesure (6) réfléchi, respectivement rétrodiffusé à l'infini atteigne une région prédéterminée de la photodiode de petite surface (4) et que, dans une deuxième étape, la photodiode de petite surface (4) est fixée au moins par l'intermédiaire de ses contacts électriques (10) de manière électroconductrice et directement à une position réglée (9, 9') sur la carte de circuit imprimé (8, 8a, 8b).

19. Procédé de réglage selon la revendication 18, **caractérisé en ce que**, le faisceau lumineux de mesure (6) étant activé, la source de rayonnement (2) est déplacée, dans une première étape de réglage de collimation exécutée en amont, par translation par rapport à la carte de circuit imprimé (8, 8a, 8b), de manière que le faisceau lumineux de mesure (6) soit focalisé à l'infini et que, dans une deuxième étape de réglage de collimation exécutée en amont, la source de rayonnement (2) est fixée au moins par l'intermédiaire de ses contacts électriques (10) de manière électroconductrice et directement à la position réglée (9, 9') sur la carte de circuit imprimé (8, 8a, 8b).

20. Procédé de réglage selon la revendication 18 ou 19, **caractérisé en ce que** la première étape et/ou la première étape de réglage de collimation préparatoire est exécutée par un manipulateur régulé automatiquement sur une valeur de consigne de réglage dans une boucle de rétroaction.
